# FASCICULE DE BREVET EUROPEEN

(11) **EP 4 158 789 B1**
(45) Date de publication et mention de la délivrance du brevet: **26.06.2024**
(21) Numéro de dépôt: 21732452.4
(22) Date de dépôt: 12.05.2021
(51) Int. Cl.: H04B 7/06, H04B 7/08, H04B 7/145, H01Q 3/44, H01Q 1/24, H01Q 3/30, H01Q 21/28

(54) **DISPOSITIF DE COMMUNICATION SANS FIL MULTI-ANTENNES, PROCÉDÉ DE CONTRÔLE D'UN TEL DISPOSITIF**
DRAHTLOSE KOMMUNIKATIONSVORRICHTUNG MIT MEHREREN ANTENNEN, VERFAHREN ZUR STEUERUNG SOLCH EINER VORRICHTUNG
MULTI-ANTENNA WIRELESS COMMUNICATION DEVICE, METHOD FOR CONTROLLING SUCH A DEVICE

(30) Priorité: 26.05.2020 FR 2005546
(43) Date de publication de la demande: 05.04.2023
(73) Titulaire: Orange, 92130 Issy-les-Moulineaux (FR)
(72) Inventeur: PHAN HUY, Dinh Thuy, 92326 CHÂTILLON CEDEX (FR); RATAJCZAK, Philippe, 92326 CHÂTILLON CEDEX (FR); BARTHEL, Dominique, 92326 CHÂTILLON CEDEX (FR)
(74) Mandataire: Cabinet Beau de Loménie
(86) Numéro de dépôt international: PCT/FR2021/050836
(87) Numéro de publication internationale: WO 2021/240091

(56) Documents cités:
- US-A- 3 423 699
- TAHA ABDELRAHMAN ET AL: "Deep Learning for Large Intelligent Surfaces in Millimeter Wave and Massive MIMO Systems", 2019 IEEE GLOBAL COMMUNICATIONS CONFERENCE (GLOBECOM), IEEE, 9 décembre 2019 (2019-12-09), pages 1-6, XP033722096, DOI: 10.1109/GLOBECOM38437.2019.9013256 cité dans la demande

## Description

### Technique antérieure

La présente invention appartient au domaine général des télécommunications, et notamment des communications sans fil mises en oeuvre sur des réseaux de type radio tels que des réseaux mobiles (ex. 3G, 4G, 5G, etc.), WiFI, etc. Elle concerne plus particulièrement un dispositif de communication sans fil comportant un réseau d'antennes élémentaires, ledit dispositif présentant une architecture hybride analogique-numérique configurée pour émettre et recevoir des faisceaux de transmission via lesdites antennes élémentaires. Elle concerne également un procédé de contrôle du fonctionnement d'un tel dispositif, ainsi qu'un procédé de communication mis en oeuvre par un système de communication sans fil comportant un tel dispositif.

L'invention trouve une application particulièrement avantageuse, bien que nullement limitative, dans le cas d'un dispositif de communication sans fil de type MIMO (acronyme de l'expression anglo-saxonne « Multiple Input Multiple Output ») utilisant plusieurs antennes en émission et en réception, et notamment dans le cas d'un dispositif de communication sans fil de type MIMO massif s'appuyant sur un grand nombre d'antennes (typiquement de 16 à 128 antennes, ce nombre étant amené à augmenter dans le futur).

Afin de s'adapter à la croissance continue et toujours plus rapide du trafic de données émises par les systèmes de communications sans fil, différentes technologies sont aujourd'hui mises en oeuvre, et font encore l'objet de perfectionnements en vue d'une exploitation optimale dans les années à venir.

Parmi ces technologies, et plus particulièrement dans le contexte des systèmes de communications sans fil de type MIMO, il est connu de configurer un dispositif de communication sans fil, comme par exemple une station de base ou un téléphone mobile, dans le but d'émettre et/ou de recevoir simultanément plusieurs flux de données via un réseau d'antennes (i.e. un ensemble d'antennes élémentaires) équipant ledit dispositif de communication sans fil. Avantageusement, ces flux de données sont véhiculés par des faisceaux de transmission directifs (encore appelée « beamforming » dans la littérature anglo-saxonne) formés à cet effet. L'utilisation de tels faisceaux permet ainsi au dispositif de communication sans fil de délivrer ou de recevoir des données avec une haute efficacité spectrale ainsi qu'avec un haut débit.

Ces performances peuvent encore être améliorées via l'utilisation de surfaces dites « intelligentes » (« Intelligent Surfaces » dans la littérature anglo-saxonne), souvent de grande taille, comme cela a été proposé récemment.

Dans son principe général, une telle surface intelligente est essentiellement composée d'antennes connectées à des déphaseurs passifs qui sont contrôlés pour permettre auxdites antennes de réfléchir des signaux incidents (ex : des faisceaux de transmission) dans une direction privilégiée. En conséquence, lorsqu'une telle surface intelligente est positionnée dans l'environnement de deux dispositifs de communication sans fil, l'un jouant le rôle d'émetteur et l'autre jouant le rôle de récepteur, elle permet d'augmenter le débit entre ces derniers en créant un canal de propagation propice à une meilleure réflexion vers le dispositif récepteur de signaux incidents provenant du dispositif émetteur. Des exemples de mises en oeuvre d'une telle surface intelligente sont par exemple décrits dans le document : « Deep Learning for Large Intelligent Surfaces in Millimeter Wave and Massive MIMO Systems », A. Taha, M. Alrabeiah, A. Alkhateeb, Proc. IEEE Globecom 2019, 9-13 Dec. 2019, Hawaii, USA.

Il convient par ailleurs de noter que l'utilisation d'une surface intelligente se révèle particulièrement avantageuse lorsqu'un obstacle empêche, ou du moins complique, l'établissement d'une communication entre un dispositif émetteur et un dispositif récepteur. A titre illustratif, il peut s'agir d'un mur positionné entre ces dispositifs, une surface intelligente permettant dès lors à ces derniers de communiquer entre eux en « contournant » ce mur.

Cela étant, la mise en oeuvre d'une surface intelligente reste encore à ce jour problématique, essentiellement pour des raisons de complexité et de coût. En effet, le contrôle efficace d'un nombre important de déphaseurs passifs se révèle être une tâche ardue, au moins en ce qui concerne l'électronique à déployer ainsi que les aspects algorithmiques et de traitement de signal à implémenter. Par ailleurs, le fait d'intégrer un élément (i.e. la surface intelligente) en sus des éléments formant initialement un système de communication sans fil (i.e. dispositifs émetteurs et dispositifs récepteurs) exige des dépenses importantes, contribuant alors à faire de l'utilisation d'une surface intelligente une solution de communication onéreuse.

### Exposé de l'invention

La présente invention a pour objectif de remédier à tout ou partie des inconvénients de l'art antérieur, notamment ceux exposés ci-avant, en proposant une solution qui permette d'améliorer les performances d'un système de communication sans fil de manière plus simple et moins coûteuse que les solutions de l'art antérieur mettant en oeuvre une surface intelligente.

A cet effet, et selon un premier aspect, l'invention concerne un dispositif de communication sans fil présentant une architecture hybride analogique-numérique configurée pour émettre et recevoir des faisceaux de transmission via un réseau d'antennes élémentaires et comportant une unité de traitement analogique comprenant des déphaseurs passifs, chaque déphaseur passif comportant un premier port et un deuxième port. En outre, ledit dispositif de communication comporte un module de contrôle configuré pour commander des moyens de commutation dudit dispositif de communication, de sorte que le dispositif de communication est apte à alterner entre trois modes distincts :
- un premier/deuxième mode dans lequel chaque déphaseur passif est intégré à une chaîne d'émission/de réception reliée à une antenne élémentaire,
- un troisième mode dans lequel chaque déphaseur passif est intégré à une ligne de transmission distincte des chaînes d'émission et de réception, ladite ligne de transmission comportant une première partie reliant le premier port dudit déphaseur passif à l'antenne élémentaire à laquelle il peut également être relié dans lesdits premier/deuxième modes et configurée de sorte que sensiblement toute l'énergie électromagnétique associée à un faisceau de transmission reçu par ladite antenne élémentaire est transmise vers le déphaseur passif, ladite ligne de transmission comportant aussi une deuxième partie reliant le deuxième port dudit déphaseur passif à une impédance configurée de sorte à réfléchir ladite énergie électromagnétique.

Ainsi, il est proposé un dispositif de communication sans fil présentant d'une part une architecture hybride analogique-numérique, et configuré d'autre part de manière logicielle et matérielle pour réfléchir un ou plusieurs faisceaux de transmission dans une direction qui peut être contrôlée grâce aux déphaseurs passifs.

Les avantages proposés par une architecture hybride analogique-numérique telle que celle mise en oeuvre par l'invention, en particulier dans le contexte de l'exploitation d'un réseau 5G, consistent notamment en un bon compromis coût/performances (hauts débits et bonne couverture réseau en émission et en réception) en comparaison avec une architecture qui reposerait entièrement sur un traitement numérique des signaux.

D'une manière générale, l'homme du métier peut se référer au document suivant pour plus de détails concernant l'implémentation d'une architecture hybride analogique-numérique : « An Overview of Signal Processing Techniques for Millimeter Wave MIMO Systems », R. W. Heath, N. González-Prelcic, S. Rangan, W. Roh, A. M. Sayeed, IEEE Journal of Selected Topics in Signal Processing, vol. 10, no. 3, pp. 436-453, April 2016.

De manière conventionnelle, les déphaseurs passifs mis en oeuvre par l'architecture hybride analogique-numérique du dispositif de communication selon l'invention permettent, selon la manière dont ils sont configurés, de contrôler la direction dans laquelle sont préférentiellement orientés les faisceaux de transmission pouvant être émis ou reçus par le réseau d'antennes élémentaires. L'invention ne se limite néanmoins pas à une telle utilisation desdits déphaseurs passifs.

En effet, chaque déphaseur passif est également exploité pour permettre de relier, suivant ledit troisième mode de fonctionnement du dispositif de communication sans fil, chaque antenne élémentaire à une impédance. De cette manière, dans ce troisième mode de fonctionnement, sensiblement toute l'énergie transportée par un signal et reçue au niveau d'une antenne élémentaire est dans un premier temps transmise jusqu'à ladite impédance, puis, dans un deuxième temps, réfléchie en direction de ladite antenne élémentaire en raison justement de la présence de ladite impédance.

Par conséquent, lorsque les déphaseurs passifs sont configurés de manière appropriée, le dispositif de communication selon l'invention se comporte comme une surface intelligente, puisqu'un signal reçu par ce dernier peut être réfléchi dans une direction choisie. De telles dispositions permettent au dispositif de communication selon l'invention d'améliorer les communications éventuelles entre d'autres dispositifs de communication, comme le proposent les surfaces intelligentes (augmentation du débit, contournement d'un obstacle).

Les modifications à envisager pour réaliser un dispositif de communication selon l'invention à partir d'un dispositif traditionnel présentant une architecture hybride analogique-numérique sont en outre peu onéreuses. En effet, la mise en oeuvre de composants tels que des impédances et des moyens de commutation appropriés peut être réalisée à moindre coût, ces composants étant très facilement accessibles.

L'invention est en outre particulièrement avantageuse dans la mesure où le dispositif de communication selon l'invention peut prendre la forme d'un équipement déjà présent dans l'environnement d'un réseau de communication. A titre d'exemple, il peut s'agir d'un terminal mobile, d'une station de base, etc. Autrement dit, en configurant suivant les dispositions de l'invention un dispositif de communication traditionnel présentant une architecture hybride analogique-numérique, il n'est pas nécessaire d'utiliser, comme cela est fait dans l'état de l'art, de surfaces intelligentes coûteuses et complexes à mettre en oeuvre.

Bien entendu, le dispositif de communication demeure en mesure de réaliser des communications de manière traditionnelle (i.e. émission/réception de faisceaux de transmission dans le cadre du premier/deuxième mode de fonctionnement).

L'invention permet donc de tirer avantageusement partie des avantages fournis par une architecture hybride analogique-numérique ainsi que par une surface intelligente, en faisant l'économie de l'implémentation effective d'une telle surface dans un réseau de communication. De cette manière, l'invention offre la possibilité d'améliorer les communications dans un réseau de communication, de façon simple et peu onéreuse.

Dans des modes particuliers de réalisation, le dispositif de communication sans fil peut comporter en outre l'une ou plusieurs des caractéristiques suivantes, prises isolément ou selon toutes les combinaisons techniquement possibles.

Dans des modes particuliers de réalisation, la première partie de la ligne de transmission comporte un circuit d'adaptation d'impédance.

Un tel circuit d'adaptation d'impédance permet d'optimiser le transfert d'énergie électromagnétique le long d'une ligne de transmission. Plus particulièrement, un tel circuit d'adaptation d'impédance peut être conçu de sorte à minimiser les réflexions locales, et donc in fine maximiser le transfert d'énergie électromagnétique, entre l'antenne élémentaire et le déphaseur passif qui lui est associé.

Dans des modes particuliers de réalisation, le module de contrôle est configuré pour mettre en oeuvre l'alternance entre lesdits trois modes distincts suivant un schéma temporel prédéterminé.

Dans des modes particuliers de réalisation, ledit schéma temporel prédéterminé est conforme à une norme de télécommunication.

Dans des modes particuliers de réalisation, le module de contrôle est configuré pour mettre en oeuvre l'alternance entre lesdits trois modes distincts suivant un schéma temporel dynamique.

Selon un deuxième aspect, l'invention concerne un système de communication sans fil comportant :
- un premier dispositif de communication sans fil configuré pour émettre au moins un faisceau de transmission,
- un deuxième dispositif de communication sans fil selon l'invention, apte à réfléchir au moins un desdits faisceaux de transmission dans une direction déterminée lorsqu'il est configuré selon ledit troisième mode,
- un troisième dispositif de communication sans fil configuré pour recevoir ledit au moins un faisceau de transmission réfléchi par ledit deuxième dispositif de communication.

Selon un troisième aspect, l'invention concerne un procédé de contrôle du fonctionnement d'un dispositif de communication sans fil selon l'invention, ledit procédé de contrôle étant mis en oeuvre par le module de contrôle dudit dispositif de communication sans fil, et dans lequel les premiers et deuxièmes moyens de commutation sont commandés de sorte que ledit dispositif de communication sans fil alterne entre lesdits trois modes distincts.

Le procédé de contrôle selon l'invention hérite donc des avantages apportés par le dispositif de communication selon l'invention, le module de contrôle permettant donc de configurer ce dispositif dans le mode qui lui permet de réfléchir un ou plusieurs faisceaux de transmission dans une direction donnée grâce aux déphaseurs passifs.

Selon un quatrième aspect, l'invention concerne un programme d'ordinateur comportant des instructions pour la mise en oeuvre d'un procédé de contrôle selon l'invention lorsque ledit programme est exécuté par un ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Selon un cinquième aspect, l'invention concerne un support d'informations ou d'enregistrement lisible par un ordinateur sur lequel est enregistré un programme d'ordinateur selon l'invention.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

Selon un sixième aspect, l'invention concerne un procédé de communication mis en oeuvre par un système de communication sans fil selon l'invention, dans lequel au moins un faisceau de transmission émis par le premier dispositif de communication est réfléchi par le deuxième dispositif de communication lorsque ledit deuxième dispositif de communication est dans ledit troisième mode et reçu par le troisième dispositif de communication.

Dans des modes particuliers de mise en oeuvre, ledit procédé de communication comporte des étapes de :
- estimation d'un premier canal de propagation entre les premier et deuxième dispositifs de communication,
- détermination, par le deuxième dispositif de communication et en fonction de l'estimation du premier canal de propagation, d'une première loi de phase apte à configurer les déphaseurs passifs en direction du premier dispositif de communication,
- estimation d'un deuxième canal de propagation entre les deuxième et troisième dispositifs de communication,
- détermination, par le deuxième dispositif de communication et en fonction de l'estimation du deuxième canal de propagation, d'une deuxième loi de phase apte à configurer les déphaseurs passifs en direction dudit troisième dispositif de communication,
- détermination, par le deuxième dispositif de communication, d'une troisième loi de phase, ladite troisième loi de phase étant égale au produit d'Hadamard de ladite première loi de phase par ladite deuxième loi de phase,
- réflexion, par le deuxième dispositif de communication configuré dans ledit troisième mode et utilisant ladite troisième loi de phase, dudit au moins un faisceau de transmission vers le troisième dispositif de communication.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1 représente schématiquement, dans son environnement, un mode particulier de réalisation d'un système de communication selon l'invention ;
[Fig. 2] la figure 2 représente schématiquement un exemple d'architecture matérielle d'un dispositif de communication sans fil selon l'invention appartenant au système de communication de la figure 1 ;
[Fig. 3] la figure 3 représente schématiquement un exemple d'architecture matérielle d'un dispositif de contrôle selon l'invention équipant le dispositif de communication sans fil de la figure 2 et configuré pour mettre en oeuvre un procédé de contrôle ;
[Fig. 4] la figure 4 représente, sous forme d'ordinogramme, un exemple particulier de mise en oeuvre du procédé de contrôle selon l'invention ;
[Fig. 5] la figure 5 représente, sous forme d'ordinogramme, un exemple particulier de mise en oeuvre d'un procédé de communication selon l'invention.

### Description des modes de réalisation

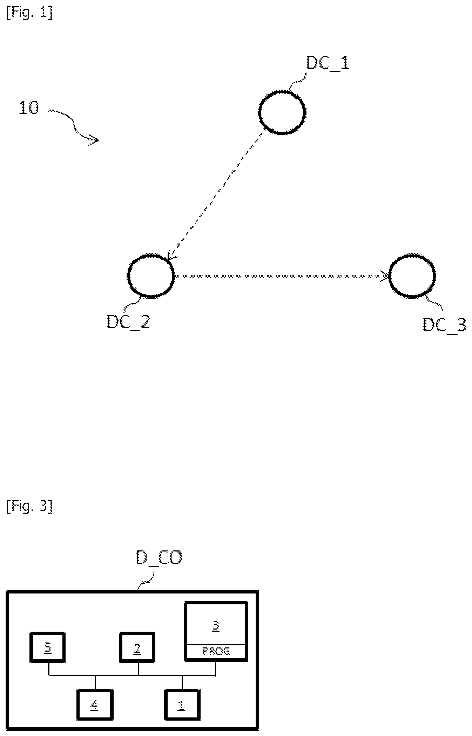

La figure 1 représente schématiquement, dans son environnement, un mode particulier de réalisation d'un système 10 de communication sans fil selon l'invention.

Le système 10 de communications sans fil est un système multi-antennes ou MIMO. Tel qu'illustré par la figure 1, ce système 10 comporte un premier dispositif de communication sans fil DC_1, un deuxième dispositif de communication DC_2 selon l'invention ainsi qu'un troisième dispositif de communication DC_3.

Dans le présent mode de réalisation, et à des fins de simplification de la description, il est considéré que le système 10 de communication comporte uniquement lesdits dispositifs de communication DC_1, DC_2 et DC_3. Il convient cependant de noter qu'aucune limitation n'est attachée au nombre de dispositifs de communication (dont notamment de dispositifs de communication selon l'invention) pouvant être considérés dans le cadre de la présente invention. Les développements qui suivent sont en effet généralisables sans difficulté par l'homme du métier au cas où plus de trois dispositifs de communication sans fil (dont une pluralité de dispositifs de communication selon l'invention) sont considérés.

Le deuxième dispositif de communication sans fil DC_2 comporte une pluralité d'antennes élémentaires (non représentées sur la figure 1) organisées sous la forme d'un réseau d'antennes et configurées pour émettre et recevoir des faisceaux, ces derniers servant de support à la transmission simultanée de plusieurs flux de données pour servir une ou plusieurs portions déterminées de l'espace. De tels faisceaux sont dits « faisceaux de transmission» dans la suite de la description. Il convient de noter que le nombre d'antennes équipant le dispositif de communication DC_2 ne constitue pas un facteur limitant de l'invention, dès lors que ce nombre est supérieur à 2.

Chaque dispositif de communication DC_1, DC_3 est quant à lui équipé d'au moins une antenne. Aucune limitation n'est attachée au nombre d'antennes équipant chacun desdits dispositifs de communication DC_1, DC_3.

De cette manière, le dispositif de communication DC_2 est apte à communiquer avec les dispositifs de communication DC_1 et DC_3. Bien entendu, rein n'exclut d'envisager que les dispositifs de communication DC_1 et DC_3 puissent communiquer directement entre eux.

Les dispositifs de communication DC_1, DC_2 et DC_3 appartiennent à un réseau de communications sans fil (non représenté sur la figure 1). Pour la suite de la description, on considère de manière non limitative que ledit réseau de télécommunications est un réseau mobile de type 5G.

Il convient toutefois de préciser que l'invention reste applicable à d'autres types de réseau de télécommunications, comme par exemple un réseau mobile 4G, 3G, Wi-Fi, etc. D'une manière générale, aucune limitation n'est attachée à la nature du réseau de télécommunications pouvant être considéré dans le cadre de la présente invention.

Il convient également de noter que l'invention est applicable indépendamment de la nature desdits dispositifs de communication DC_1, DC_2 et DC_3, dès lors que ces derniers sont en mesure de réaliser des communications sans fil. Ainsi, rien n'exclut de considérer qu'au moins un des dispositifs de communication est un terminal mobile, comme par exemple un ordinateur portable, un assistant personnel, un objet connecté, un téléphone mobile de type « smartphone », etc. et qu'au moins un autre desdits dispositifs de communication est une station de base. Rien n'exclut non plus de considérer que les dispositifs de communication DC_1, DC_2 et DC_3 sont tous trois des terminaux mobiles ou bien tous trois des stations de base.

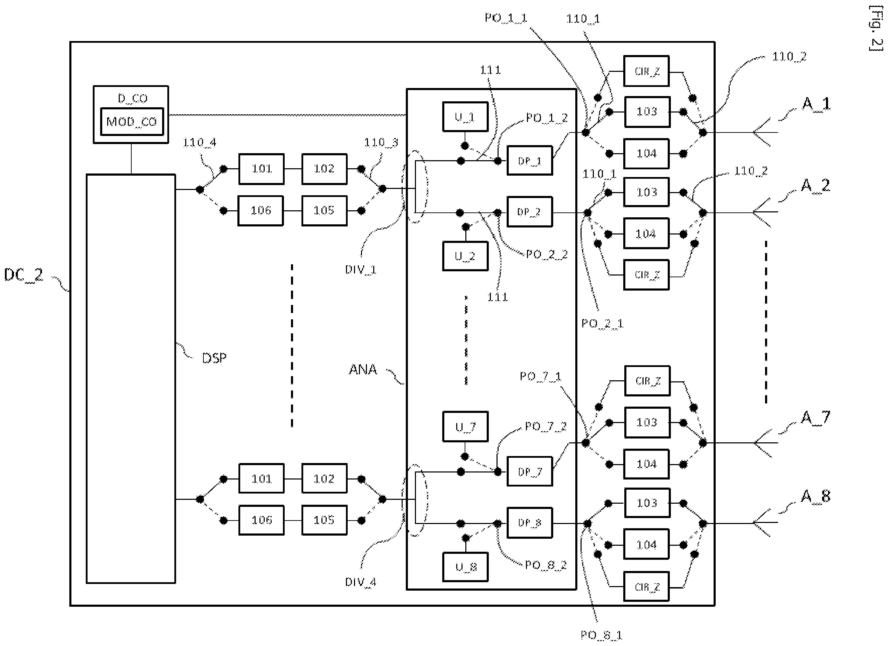

La figure 2 représente schématiquement un exemple d'architecture matérielle du deuxième dispositif sans fil DC_2 selon l'invention appartenant au système 10 de communication de la figure 1.

Le dispositif de communication DC_2 présente une architecture hybride analogique-numérique configurée pour émettre et recevoir des faisceaux de transmission via lesdites antennes élémentaires A_1, ..., A_N, N étant un indice entier strictement supérieur à 1. Dans l'exemple de la figure 2, et à des fins de simplification de celle-ci, le nombre N d'antennes élémentaires est considéré égal à 8.

Les avantages proposés par une telle architecture hybride analogique-numérique, en particulier dans le contexte de l'exploitation d'un réseau 5G comme ici considéré, consistent notamment en un bon compromis coût/performances en comparaison avec une architecture qui reposerait entièrement sur un traitement numérique des signaux.

De manière conventionnelle, ladite architecture hybride analogique-numérique repose, notamment, sur la combinaison entre une unité de traitement numérique, dite unité « DSP » (acronyme de l'expression-anglo-saxonne « Digital Signal Processing ») et une unité de traitement analogique, dite unité « ANA ».

Le dispositif de communication DC_2 comporte également une pluralité de chaînes d'émission RF (acronyme de « Radio Fréquence ») ainsi qu'une pluralité de chaîne de réception RF.

Chaque chaîne d'émission comporte une partie dite « interne » comprenant un convertisseur numérique-analogique 101 et un modulateur 102 agencés entre l'unité DSP et l'unité ANA, ainsi qu'une partie dite « externe » comprenant un amplificateur de puissance 103 agencé entre une antenne élémentaire et l'unité ANA. De manière analogue, chaque chaîne de réception comporte une partie dite « externe » comprenant un amplificateur faible bruit 104 agencé entre une antenne élémentaire et l'unité ANA, ainsi qu'une partie dite « interne » comprenant un démodulateur 105 et un convertisseur analogique-numérique 106 agencés entre l'unité DSP et l'unité ANA.

Bien entendu, une chaîne d'émission (respectivement une chaîne de réception), quelle que soit la partie interne ou externe considérée, peut comporter encore d'autres équipements électroniques (filtres, etc.), cet aspect n'étant pas décrit plus avant ici car sortant du cadre de l'invention.

Dans le présent exemple de réalisation illustré par la figure 2, le dispositif de communication DC_2 comporte autant de chaînes d'émission que de chaînes de réception. Il convient cependant de noter que le choix consistant à considérer un nombre de chaînes d'émission égal au nombre de chaînes de réception ne constitue qu'une variante de réalisation de l'invention. Ainsi, rien n'exclut d'envisager que ces nombres diffèrent entre eux. De manière plus générale, aucune limitation n'est attachée au nombre de chaînes d'émission ainsi qu'au nombre de chaînes de réception pouvant être considérées dans le cadre de la présente invention dès lors que le dispositif de communication DC_2 est en mesure d'émettre et de recevoir des faisceaux de transmission. L'homme du métier sait adapter la description qui suit en fonction des nombres respectifs de ces chaînes, en particulier concernant les aspects liés aux moyens de commutation décrits en détails ci-après.

Ladite unité DSP est configurée pour effectuer des traitements visant à générer des signaux en bande de base destinés à être acheminés vers le réseau d'antennes A_1, ..., A_N via lesdites chaînes d'émission, ainsi qu'à traiter des signaux reçus par ledit réseau d'antennes A_1, ..., A_N et qui lui sont acheminés via les chaînes de réception.

A cet effet, l'unité DSP comporte par exemple un ou plusieurs processeurs et des moyens de mémorisation (disque dur magnétique, mémoire électronique, disque optique, etc.) dans lesquels sont mémorisés des données et un programme d'ordinateur, sous la forme d'un ensemble d'instructions de code de programme à exécuter pour mettre en oeuvre les traitements de signaux susmentionnés.

Alternativement ou en complément, l'unité DSP comporte également un ou des circuits logiques programmables, de type FPGA, PLD, etc., et / ou circuits intégrés spécialisés (ASIC), et / ou un ensemble de composants électroniques discrets, etc. adaptés à mettre en oeuvre lesdits traitements de signaux.

En d'autres termes, l'unité DSP comporte un ensemble de moyens configurés de façon logicielle (programme d'ordinateur spécifique) et / ou matérielle (FPGA, PLD, ASIC, etc.) pour mettre en oeuvre lesdits traitements de signaux.

L'unité de traitement analogique ANA, quant à elle, est séparée de l'unité DSP par les parties internes desdites chaînes d'émission et de réception. Elle comporte des déphaseurs passifs DP_1, ..., DP_N agencés de sorte à relier, via notamment des moyens de commutations décrits ultérieurement, les parties externes des chaînes d'émission et de réception (et donc in fine les antennes élémentaires A_1, ..., A_N) aux parties internes desdites chaînes d'émission et de réception.

Lesdits déphaseurs passifs sont de conception connue en soi et sont configurés pour affecter des poids à des signaux analogiques, de manière ajustée et adaptative en vue de l'émission ou de la réception de faisceaux de transmission par le réseau des antennes élémentaires A_1, ..., A_N, pour s'inscrire par exemple dans le cadre d'une stratégie de communication donnée. A titre illustratif, une telle stratégie peut consister à maximiser la puissance du signal reçu au niveau d'un ou plusieurs terminaux récepteurs, comme par exemple le dispositif de communication DC_3.

Pour plus de détails concernant l'implémentation d'une architecture hybride analogique-numérique, l'homme du métier peut se référer au document de R. W. Heath et al. déjà mentionné auparavant.

De manière conventionnelle, l'architecture hybride analogique-numérique du dispositif de communication DC_2 est configurée de sorte qu'un déphaseur passif DP_i (i étant un indice entier compris entre 1 et N) peut être relié à une antenne A_i. A cet effet, chaque déphaseur passif DP_i comporte un premier port PO_i_1 et un deuxième port PO_i 2. Ledit premier port PO_i_1 est destiné à être connecté à l'antenne A_i qui lui est associée à travers la partie externe d'une chaîne d'émission ou de la partie externe d'une chaîne de réception. Le deuxième port PO_i 2, quant à lui, est destiné à être connecté à la partie interne d'une chaîne d'émission ou d'une chaîne de réception.

Conformément à l'invention, l'unité ANA comporte également des impédances U_1, ..., U_N. Par ailleurs, le deuxième port PO_i 2 d'un déphaseur passif DP_i peut également être connecté à une desdites impédances U_i comme cela est décrit en détails ultérieurement (chaque déphaseur passif peut ainsi être relié à une seule impédance, étant entendu qu'il y a autant d'impédances que de déphaseurs passifs).

Tel qu'illustré par la figure 2, l'unité ANA comporte également des diviseurs DIV_1, ..., DIV_P (P étant un indice entier strictement supérieur à 1) permettant de relier un ensemble formé de deux déphaseurs passifs à la partie interne d'une chaîne d'émission ou d'une chaîne de réception. On comprend donc que ce sont les deuxièmes ports des déphaseurs appartenant à un tel ensemble qui sont reliés à un diviseur. En d'autres termes, dans cet exemple de réalisation, il y a deux fois plus d'antennes élémentaires que de diviseurs (i.e. P est égal à N/2).

Toutefois, et en concordance avec ce qui a déjà été mentionné ci-avant (absence de limitation quant au nombre de chaînes d'émission et de réception), rien n'exclut, suivant d'autres exemples non détaillés ici, d'avoir un ou plusieurs diviseurs aptes à relier des ensembles formés de plus de deux diviseurs à une chaîne d'émission ou une chaîne de réception. D'ailleurs, rien n'exclut non plus d'envisager qu'aucun diviseur ne soit utilisé. D'une manière générale, ces aspects ne sont pas un facteur limitant de l'invention.

Le dispositif de communication DC_2 comporte plusieurs moyens de commutation. Ainsi, et dans un premier temps, ledit dispositif DC_2 comporte, pour chaque déphaseur passif DP_i, des premiers moyens de commutation configurables selon trois états.

Pour la suite de la description, on considère de manière nullement limitative que lesdits premiers moyens de commutation associés à un déphaseur passif DP_i sont des commutateurs multi-voies 110_k (k étant un indice entier compris entre 1 et 4) aptes à être commandés par des signaux de commande appropriés pour passer d'une position à une autre position, lesdits trois états étant définis par des positions données desdits commutateurs 110_k. Il convient cependant de noter qu'aucune limitation n'est attachée à la nature desdits premiers moyens de commutation dès lors qu'ils peuvent être configurés selon lesdits trois états décrits dorénavant.

Le premier desdits trois états associés aux premiers moyens de commutation est un état dit « d'émission » dans lequel l'antenne élémentaire A_i associée audit déphaseur passif DP_i est connectée au premier port PO_i_1 de ce dernier pour émettre des faisceaux de transmission.

A titre d'exemple nullement limitatif, et tel qu'illustré par la figure 2, la mise en oeuvre de cet état d'émission s'effectue grâce à :
- un commutateur 110_1 relié au premier port PO_i_1 du déphaseur passif DP_i considéré. On note que par « commutateur relié », on fait référence ici au fait qu'une voie donnée dudit commutateur 110_1 est reliée audit premier port PO_i_1. Ce commutateur 110_1 est configuré dans une première position dans laquelle ledit premier port PO_i_1 est connecté à l'amplificateur de puissance 103 associé à l'antenne élémentaire A_i ;
- un commutateur 110_2 relié à ladite antenne élémentaire A_i, et configuré dans une première position dans laquelle ledit amplificateur de puissance 103 est connecté à ladite antenne élémentaire A_i ;
- un commutateur 110_3 relié au diviseur associé au déphaseur passif DP_i considéré, et configuré dans une première position dans laquelle ledit diviseur est connecté à la partie interne de la chaîne d'émission à laquelle appartient l'amplificateur de puissance 103 associé à l'antenne élémentaire A_i ;
- un commutateur 110_4 relié à l'unité DSP, et configuré dans une première position dans laquelle ladite partie interne est connectée à ladite unité DSP.

Il est à noter que les déphaseurs passifs connectés à un même diviseur sont reliés à un même commutateur 110_3.

Le deuxième desdits trois états associés aux premiers moyens de commutation est un état dit « de réception » dans lequel l'antenne élémentaire A_i associée audit déphaseur passif DP_i est connectée au premier port PO_i_1 de ce dernier pour recevoir des faisceaux de transmission.

Dans l'exemple de la figure 2, la mise en oeuvre de cet état de réception s'effectue de la façon suivante :
- ledit commutateur 110_1 est configuré dans une deuxième position dans laquelle ledit premier port PO_i_1 est connecté à l'amplificateur faible bruit 104 associé à l'antenne élémentaire A_i ;
- ledit commutateur 110_2 est configuré dans une deuxième position dans laquelle ledit amplificateur faible bruit 104 est connecté à ladite antenne élémentaire A_i ;
- ledit commutateur 110_3 est configuré dans une deuxième position dans laquelle ledit diviseur est connecté à la partie interne de la chaîne de réception à laquelle appartient l'amplificateur faible bruit 104 associé à l'antenne élémentaire A_i ;
- ledit commutateur 110_4 est configuré dans une deuxième position dans laquelle ladite partie interne est connectée à ladite unité DSP.

Le troisième desdits trois états associés aux premiers moyens de commutation est un état dit de « réflexion A » dans lequel l'antenne élémentaire A_i associée au déphaseur DP_i considéré est connectée au premier port PO_i_1 dudit déphaseur passif DP_i via une première partie d'une ligne de transmission. Cette ligne de transmission est distincte de la chaîne d'émission (respectivement de la chaîne de réception) comportant l'amplificateur de puissance 103 (respectivement l'amplificateur faible bruit 104) auquel le premier port PO_i_1 du déphaseur passif DP_i peut être connecté.

Par ailleurs, ladite première partie de la ligne de transmission est configurée de sorte que sensiblement toute l'énergie électromagnétique associée à un faisceau de transmission reçu par ladite antenne élémentaire A_i est transmise vers le déphaseur passif DP_i et est destinée à être réfléchie.

Afin de permettre une telle transmission d'énergie, et tel qu'illustré par la figure 2, ladite première partie de la ligne de transmission comporte par exemple un circuit d'adaptation d'impédance CIR_Z. Dans ce cas, et en référence à la figure 2, on a que l'état de réflexion A fait référence à la configuration suivante :
- ledit commutateur 110_1 est configuré dans une troisième position dans laquelle ledit premier port PO_i_1 est connecté au circuit CIR_Z ;
- ledit commutateur 110_2 est configuré dans une troisième position dans laquelle ladite antenne élémentaire A_i est connectée au circuit CIR_Z ;
- les positions respectives des commutateurs 110_3 et 110_4 sont quelconques.

Un tel circuit d'adaptation d'impédance CIR_Z permet classiquement d'optimiser le transfert d'énergie électromagnétique le long d'une ligne de transmission. Plus particulièrement, un tel circuit d'adaptation d'impédance CIR_Z peut être conçu de sorte à minimiser les réflexions locales, et donc in fine à maximiser le transfert d'énergie électromagnétique, entre l'antenne élémentaire A_i et le déphaseur passif DP_i qui lui est associé.

Ledit circuit d'adaptation d'impédance CIR_Z peut comporter différents composants électroniques tels que des condensateurs, des inductances, des résistances, etc., et plus largement tout composant électronique présentant une impédance qui lui est propre. D'une manière générale, la conception et la mise en oeuvre d'un tel circuit d'adaptation d'impédance CIR_Z sont connues de l'homme du métier, de sorte que cet aspect n'est décrit plus avant ici.

Dans l'exemple de réalisation illustré par la figure 2, les circuits d'impédance d'adaptation CIR_Z pouvant être respectivement reliés aux antennes A_1, ..., A_N sont tous identiques entre eux. Cependant, rien n'exclut d'envisager qu'au moins deux circuits d'adaptation d'impédance diffèrent entre eux, en fonction notamment des impédances caractéristiques des déphaseurs passifs et des antennes que ces au moins deux circuits d'adaptation d'impédance sont destinés à connecter entre eux dans l'état de réflexion A.

Il est à noter que l'invention ne se limite pas à la mise en oeuvre d'un circuit d'adaptation d'impédance pour que sensiblement toute l'énergie électromagnétique associée à un faisceau reçu par ladite antenne élémentaire soit transmise vers le déphaseur passif. En effet, une telle transmission d'énergie dépend avant tout des impédances caractéristiques du déphaseur passif DP_i et de l'antenne élémentaire A_i qui lui est associée.

Ainsi, rien n'exclut d'envisager un exemple dans lequel ladite transmission d'énergie s'effectue le long d'une ligne de transmission formant un court-circuit entre ledit déphaseur passif DP_i et ladite antenne élémentaire A_i. On a alors que l'état de réflexion A fait référence à la configuration suivante :
- ledit commutateur 110_1 est configuré dans une troisième position dans laquelle ledit premier port PO_i_1 est connecté à une extrémité de la ligne de transmission formant court-circuit ;
- ledit commutateur 110_2 est configuré dans une troisième position dans laquelle ladite antenne élémentaire A_i est connectée à l'autre extrémité de ladite ligne de transmission formant court-circuit ;
- les positions respectives des commutateurs 110_3 et 110_4 sont quelconques.

Par ailleurs, et dans un deuxième temps, ledit dispositif DC_2 comporte, pour chaque déphaseur passif DP_i, des deuxièmes moyens de commutation intégrés à ladite unité ANA et configurables selon deux états.

Pour la suite de la description, on considère de manière nullement limitative que lesdits deuxièmes moyens de commutation sont un commutateur multi-voies 111 apte à être commandé par des signaux de commande appropriés pour passer d'une position à une autre position, lesdits deux états étant définis par des positions données dudit commutateur 111. Il convient cependant de noter qu'aucune limitation n'est attachée à la nature desdits deuxièmes moyens de commutation dès lors qu'ils peuvent être configurés selon lesdits deux états décrits dorénavant.

Le premier desdits deux états associés aux deuxièmes moyens de commutation est un état dit de « transmission » dans lequel le deuxième port PO_i_2 du déphaseur passif DP_i considéré est connecté à une chaîne d'émission ou une chaîne de réception (plus particulièrement à la partie interne d'une telle chaîne).

Dans l'exemple de la figure 2, la mise en oeuvre de cet état de transmission s'effectue grâce au commutateur 111 qui est relié (i.e. dont une voie donnée est reliée) au deuxième port PO_i 2 du déphaseur passif DP_i. Ce commutateur 111 est configuré dans une première position dans laquelle ledit deuxième port PO_i_2 est connecté au diviseur associé audit déphaseur passif DP_i. De cette manière, ledit déphaseur passif DP_i est connecté à la partie interne d'une chaîne d'émission ou de réception.

Le deuxième desdits deux états associés aux deuxièmes moyens de commutation est un état dit de « réflexion B » dans lequel le deuxième port PO_i_2 du déphaseur passif DP_i considéré est connecté à une desdites impédances U_i via une deuxième partie de la ligne de transmission à laquelle appartient la première partie pouvant connecter le premier port PO_i_1 du déphaseur passif DP_i à l'antenne élémentaire A_i lorsque les premiers moyens de commutation sont dans l'état de réflexion A.

Ladite impédance U_i est configurée de sorte à réfléchir l'énergie électromagnétique que ledit déphaseur passif DP_i est susceptible de lui acheminer lorsque les premiers moyens de commutation sont dans l'état de réflexion A. Par exemple, une telle impédance U_i est obtenue grâce à un court-circuit ou un circuit ouvert, de sorte à maximiser l'énergie réfléchie. On note par ailleurs que les impédances U_i peuvent être par exemple toutes identiques entre elles.

Dans l'exemple de la figure 2, la mise en oeuvre de cet état de réflexion B s'effectue grâce au commutateur 111 qui est relié au deuxième port POJ_2 du déphaseur passif DP_i. Ce commutateur 111 est configuré dans une deuxième position dans laquelle ledit deuxième port PO_i_2 est connecté à ladite impédance U_i via ladite deuxième partie de la ligne de transmission.

De plus, le deuxième dispositif de communication DC_2 comporte un dispositif de contrôle D_CO configuré pour mettre en oeuvre des traitements visant à permettre au deuxième dispositif de communication DC_2 de réfléchir un ou plusieurs faisceaux de transmission reçus au niveau des antennes élémentaires A_1, ..., A_n, en mettant en oeuvre un procédé de contrôle du fonctionnement dudit dispositif DC_2.

Pour la suite de la description, on considère de manière nullement limitative que le dispositif de contrôle D_CO forme un élément matériel à part, intégré matériellement au deuxième dispositif de communication DC_2. L'invention reste néanmoins applicable dans le cas où le dispositif de contrôle D_CO est extérieur (i.e. n'est pas intégré matériellement) au deuxième dispositif de communication DC_2, ou bien encore dans le cas où ledit deuxième dispositif de communication DC_2 et le dispositif de contrôle D_CO sont confondus.

La figure 3 représente schématiquement un exemple d'architecture matérielle du dispositif de contrôle D_CO selon l'invention configuré pour mettre en oeuvre ledit procédé de contrôle.

Tel qu'illustré par la figure 3, le dispositif de contrôle D_CO selon l'invention dispose de l'architecture matérielle d'un ordinateur. Ainsi, un tel dispositif de contrôle D_CO comporte, notamment, un processeur 1, une mémoire vive 2, une mémoire morte 3 et une mémoire non volatile 4. Il dispose en outre d'un module de communication 5.

Le module de communication 5 permet notamment au dispositif de contrôle D_CO de transmettre des signaux de commande aux premiers et deuxièmes moyens de commutation. Ce module de communication 5 comporte par exemple un bus de données informatiques apte à la transmission desdits signaux de commande. Selon un autre exemple, les moyens de communication 5 comportent une interface de communication, filaire ou non filaire, apte à mettre en oeuvre tout protocole adapté connu de l'homme du métier (Ethernet, Wifi, Bluetooth, 3G, 4G, 5G, etc.).

La mémoire morte 3 du dispositif de contrôle D_CO constitue un support d'enregistrement conforme à l'invention, lisible par le processeur 1 et sur lequel est enregistré un programme d'ordinateur PROG conforme à l'invention, comportant des instructions pour l'exécution d'étapes du procédé de contrôle selon l'invention. Le programme PROG définit plus particulièrement un module fonctionnel dit « module de contrôle MOD_CO » du dispositif de contrôle D_CO. Ce module de contrôle MOD_CO est configuré pour commander, en s'appuyant sur les éléments matériels 2 à 5 du dispositif de contrôle D_CO cités précédemment, lesdits premiers et deuxièmes moyens de commutation associés à l'ensemble des déphaseurs passifs DP_1, ..., DP_N, de sorte que le deuxième dispositif de communication DC_2 est apte à alterner entre trois modes distincts.

Le premier desdits trois modes distincts est un mode dans lequel, pour chaque déphaseur passif DP_i, les premiers moyens de commutation sont dans l'état d'émission et les deuxièmes moyens de commutation sont dans l'état de transmission. Autrement dit, dans ce premier mode, chaque déphaseur passif DP_i est intégré à une chaîne d'émission, et le deuxième dispositif de communication DC_2 est configuré pour émettre un ou plusieurs faisceaux de transmission au moyen des chaînes d'émission auxquelles sont intégrés les déphaseurs passifs DP_1, ..., DP_N.

En référence à la figure 2, la mise en oeuvre de ce premier mode s'effectue de la façon suivante :
- les commutateurs 110_1, 110_2, 110_3 et 110_4 sont dans leurs premières positions respectives,
- le commutateur 111 est dans sa première position.

Le deuxième desdits trois modes distincts est un mode dans lequel, pour chaque déphaseur passif DP_i, les premiers moyens de commutation sont dans l'état de réception et les deuxièmes moyens de commutation sont dans l'état de transmission. Autrement dit, dans ce deuxième mode, chaque déphaseur passif DP_i est intégré à une chaîne de réception, et le deuxième dispositif de communication DC_2 est configuré pour recevoir un ou plusieurs faisceaux de transmission au moyen des chaînes de réception auxquelles sont intégrés les déphaseurs passifs DP_1, ..., DP_N.

En référence à la figure 2, la mise en oeuvre de ce deuxième mode s'effectue de la façon suivante :
- les commutateurs 110_1, 110_2, 110_3 et 110_4 sont dans leurs deuxièmes positions respectives,
- le commutateur 111 est dans sa première position.

Enfin, le troisième desdits trois modes distincts est un mode dans lequel, pour chaque déphaseur passif DP_i, les premiers moyens de commutation sont dans l'état de réflexion A et les deuxièmes moyens de commutation sont dans l'état de réflexion B. Autrement dit, dans ce troisième mode, chaque déphaseur passif DP_i est intégré à la ligne de transmission qui lui est associée, et le deuxième dispositif de communication DC_2 est configuré pour réfléchir un ou plusieurs faisceaux de transmission dans une direction déterminée par la configuration des déphaseurs passifs (i.e. dans une direction déterminée en fonction des poids associés aux déphaseurs passifs).

En référence à la figure 2, la mise en oeuvre de ce troisième mode s'effectue de la façon suivante :
- les commutateurs 110_1, 110_2 sont dans leurs troisièmes positions respectives,
- le commutateur 111 est dans sa deuxième position,
- les commutateurs 110_3, 110_4 sont dans une position quelconque (i.e. première ou deuxième position).

Dans cet exemple de réalisation, on considère que le module de contrôle MOD_CO est également configuré pour déterminer les poids qu'ils convient d'affecter aux différents déphaseurs passifs DP_1, ..., DP_N, mais également pour commander ces derniers en fonction des poids qui ont été déterminés.

Rien n'exclut toutefois d'envisager, suivant d'autres exemples non détaillés ici, que le module de contrôle MOD_CO est uniquement configuré pour commander les premiers et deuxièmes moyens de commutation, de sorte que le dispositif DC_2 est apte à alterner entre trois modes distincts, et qu'un autre module de contrôle dudit dispositif DC_2 est quant à lui configuré pour déterminer les poids à affecter aux déphaseurs passifs DP_1, ..., DP_N ainsi que pour commander ces derniers en fonction des poids qui ont été déterminés.

Le contrôle du fonctionnement du deuxième dispositif de communication DC_2, mis en oeuvre par le module de contrôle MOD_CO, permet donc d'alterner entre les trois modes du dispositif DC_2. Le fait de permettre au dispositif DC_2 de fonctionner selon ledit troisième mode est particulièrement avantageux. En effet, lorsque les déphaseurs passifs sont configurés de manière appropriée, cela offre la possibilité d'améliorer les communications éventuelles entre le premier dispositif de communication DC_1 et le troisième dispositif de communication DC_3 du système 10, le deuxième dispositif de communication DC_2 jouant ainsi le rôle d'une surface intelligente.

Ceci est avantageux dans la mesure où le deuxième dispositif de communication DC_2 peut correspondre à un équipement déjà présent dans l'environnement desdits premier et troisième dispositifs de communication. Autrement dit, en configurant selon l'invention un dispositif de communication traditionnel (terminal mobile, station de base, etc.) présentant une architecture hybride analogique-numérique, il n'est pas nécessaire d'utiliser, comme cela est fait dans l'état de l'art, de surfaces intelligentes coûteuses et complexes à mettre en oeuvre.

Dans un mode plus particulier de réalisation, le module de contrôle MOD_CO est configuré pour mettre en oeuvre l'alternance entre lesdits trois modes distincts suivant un schéma temporel prédéterminé.

Par « schéma temporel prédéterminé », on fait référence ici au fait que des périodes temporelles prédéterminées sont allouées à chacun desdits trois modes, le contrôle du fonctionnement du deuxième dispositif de communication DC_2 étant réalisé de sorte que ces périodes temporelles sont respectées.

A titre d'exemple nullement limitatif, ledit schéma temporel prédéterminé est conforme à une norme de télécommunication.

Selon un autre exemple, ou bien éventuellement suivant une mise en oeuvre particulière d'une norme de télécommunication, le schéma temporel prédéterminé comporte :
- une première période temporelle au cours de la journée pendant laquelle le deuxième dispositif de communication DC_2 alterne uniquement entre les premier et deuxième modes,
- une deuxième période temporelle en cours de nuit pendant laquelle le deuxième dispositif de communication DC_2 fonctionne uniquement selon ledit troisième mode,
les durées respectives desdites première et deuxième périodes temporelles pouvant par exemple être fixées par un opérateur en charge de l'exploitation du réseau de télécommunication.

D'une manière générale, aucune limitation n'est attachée à la durée et au nombre desdites périodes temporelles, et donc in fine à la structure dudit schéma temporel prédéterminé. En outre, on comprend bien entendu qu'un tel schéma temporel prédéterminé est non seulement connu du deuxième dispositif de communication DC_2, mais également des premier et troisième dispositifs de communication DC_1, DC_3, de sorte que tous ces dispositifs puissent communiquer entre eux de manière coordonnée.

En alternative, le module de contrôle MOD_CO est configuré pour mettre en oeuvre l'alternance entre lesdits trois modes distincts suivant un schéma temporel dynamique.

Par « schéma temporel dynamique », on fait référence ici à un schéma temporel selon lequel l'alternance entre les trois modes de fonctionnement du deuxième dispositif de communication DC_2 s'effectue suivant des périodes temporelles qui ne sont pas prédéterminées. Autrement dit, l'alternance entre les trois modes peut s'effectuer librement, à la volée.

Par exemple, des messages de signalisation peuvent être échangés de manière dynamique entre les dispositifs de communication DC_1, DC_2 et DC_3. Ces messages sont configurés de sorte qu'une fois reçus par le deuxième dispositif de communication DC_2 (respectivement par les premier et troisième dispositifs de communication DC_1, DC_3), ce dernier sait dans quel mode il doit fonctionner (respectivement ces derniers savent dans quel mode le deuxième dispositif de communication DC_2 est configuré).

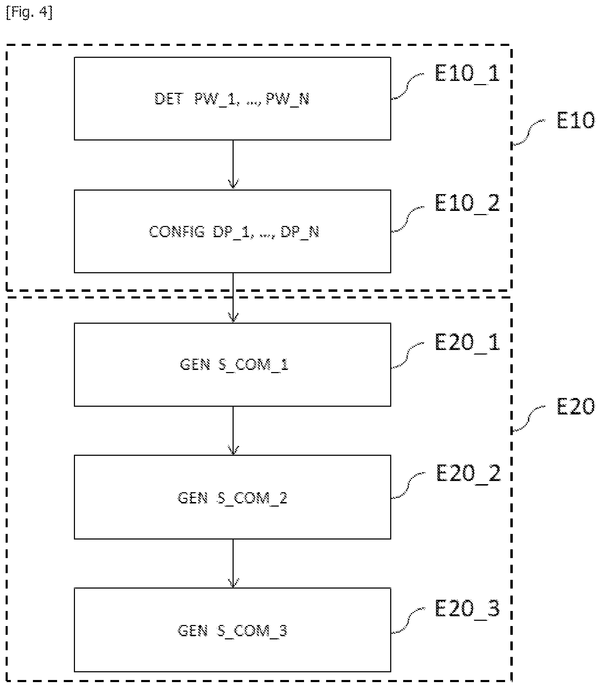

La figure 4 représente, sous forme d'ordinogramme, un exemple particulier de mise en oeuvre du procédé de contrôle selon l'invention.

Dans cet exemple particulier de mise en oeuvre, on considère que l'alternance entre les trois modes distincts associés au deuxième dispositif de communication DC_2 s'effectue suivant un schéma temporel prédéterminé, et qu'en outre une période temporelle au cours de laquelle ledit dispositif DC_2 est destiné à réfléchir un ou plusieurs faisceaux de transmission (troisième mode) dans une direction donnée débute.

On considère également qu'avant le début de cette période temporelle, ledit deuxième dispositif de communication DC_2 est configuré dans le premier mode (i.e. premiers moyens de commutation dans l'état d'émission et deuxièmes moyens de commutation dans l'état de transmission).

Dès lors, lorsque ladite période temporelle débute, le procédé de contrôle comporte une étape E10 de configuration des déphaseurs passifs DP_1, ..., DP_N.

A cet effet, l'étape E10 comprend dans un premier temps, pour chaque déphaseur passif DP_i, une détermination (sous-étape E10_1) d'un poids PW_i en fonction de ladite direction dans laquelle le ou les faisceaux sont destinés à être réfléchis.

Puis, l'étape E10 comprend dans un deuxième temps une configuration (sous-étape E10_2) des déphaseurs passifs DP_1, ..., DP_N en fonction des poids PW_1, ..., PW_N qui sont leur sont respectivement attribués. A cet effet, le module de contrôle MOD_CO génère des signaux de commande appropriés, ces signaux de commande étant transmis aux déphaseurs passifs DP_1, ..., DP_N.

Par la suite, le procédé de contrôle comporte une étape E20 de commande des premiers et deuxièmes moyens de commutation de sorte que le deuxième dispositif de communication DC_2 passe du premier mode au troisième mode.

A cet effet, le module de contrôle MOD_CO génère des signaux de commande desdits premiers et deuxièmes moyens de commutation. Plus particulièrement, et en référence à la figure 2 :
- un premier signal de commande S COM_1 est généré (sous-étape E20_1) pour faire passer le commutateur 110_1 de sa première position à sa troisième position ;
- un deuxième signal de commande S_COM_2 est généré (sous-étape E20_2) pour faire passer le commutateur 110_2 de sa première position à sa troisième position ;
- un troisième signal de commande S_COM_3 est généré (sous-étape E20_3)pour faire passer le commutateur 111 de sa première position à sa deuxième position.

Bien entendu, l'exemple de mise en oeuvre de la figure 4 est donné ici à titre purement illustratif, le procédé de contrôle selon l'invention ne se limitant en aucun cas à un passage du premier mode au troisième mode. Ainsi, n'importe quelle séquence formée de passages d'un mode donné à un autre mode donné peut être envisagée. En outre, le procédé de contrôle ne se limite pas plus à la seule mise en oeuvre d'une réflexion d'un ou plusieurs faisceaux de transmission par le deuxième dispositif de communication DC_2. En particulier, étant donné la configuration matérielle du dispositif de communication DC_2, rien n'exclut qu'il émette ou reçoive des données de manière conventionnelle (i.e. au moyen de ses chaînes d'émission/réception) lorsqu'il est configuré selon le premier mode ou le deuxième mode. Le procédé de contrôle selon l'invention peut dès lors comporter d'autres étapes de commande et/ou d'étapes de configuration de sorte à permettre une telle émission/réception conventionnelle de données.

Le procédé de contrôle a été décrit ci-avant sans faire référence explicitement à une communication entre les dispositifs de communication DC_1, DC_2 et DC_3 formant le système 10. Il importe toutefois de noter que l'invention concerne également un procédé de communication mis en oeuvre par le système 10 de communication sans fil de la figure 1, dans lequel au moins un faisceau de transmission émis par le premier dispositif de communication DC_1 est réfléchi par le deuxième dispositif de communication DC_2 lorsque ledit deuxième dispositif de communication DC_2 est dans ledit troisième mode et reçu par le troisième dispositif de communication DC_3 (une telle réflexion est représentée à titre illustratif au moyen de flèches en pointillés dans la figure 1).

On comprend bien entendu que le deuxième dispositif de communication DC_2 alterne entre différents modes au cours du procédé de communication. Autrement dit, le procédé de contrôle décrit ci-avant est lui-même mis en oeuvre de manière implicite lors de l'exécution du procédé de communication.

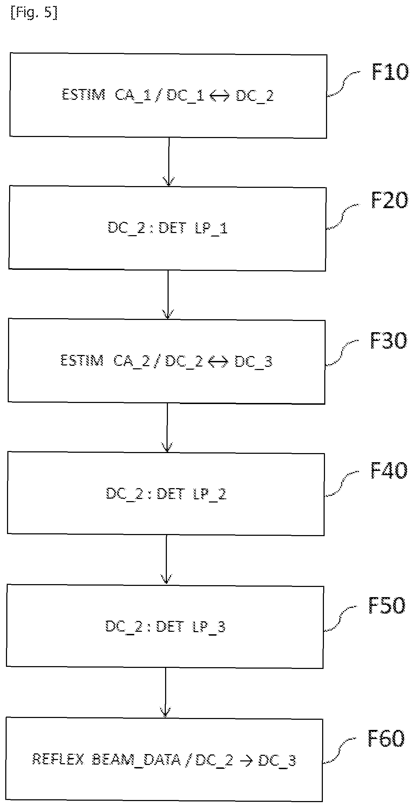

La figure 5 représente, sous forme d'ordinogramme, un exemple particulier de mise en oeuvre du procédé de communication selon l'invention.

Dans l'exemple de la figure 5, le procédé de communication comportant une étape F10 d'estimation d'un premier canal de propagation CA_1 entre les premier et deuxième dispositifs de communication DC_1, DC_2.

Ladite étape F10 est mise en oeuvre de manière connue en soi par lesdits premier et deuxième dispositifs de communication DC_1, DC_2. Par exemple, le premier dispositif de communication DC_1 transmet audit deuxième dispositif de communication DC_2 des messages contenant des symboles pilotes permettant de réaliser l'estimation dudit premier canal. Aussi, dans cet exemple, le deuxième dispositif de communication DC_2 est dans le deuxième mode.

Le procédé de communication comporte également une étape F20 de détermination, par le deuxième dispositif de communication DC_2 et en fonction de l'estimation du premier canal de propagation CA_1, d'une première loi de phase LP_1 apte à configurer les déphaseurs passifs DP_1, ..., DP_N en direction du premier dispositif de communication DC_1.

Une telle loi de phase LP_1 correspondant à un ensemble de poids (une matrice de poids) destinés à être affectés aux déphaseurs passifs DP_1, ..., DP_N afin de configurer ces derniers en direction du premier dispositif de communication DC_1.

Le procédé de communication comportant aussi une étape F30 d'estimation d'un deuxième canal de propagation CA_2 entre les deuxième et troisième dispositifs de communication DC_2, DC_3.

Le procédé de communication comporte également une étape F40 de détermination, par le deuxième dispositif de communication DC_2 et en fonction de l'estimation du deuxième canal de propagation CA_2, d'une deuxième loi de phase LP_2 apte à configurer les déphaseurs passifs DP_1, ..., DP_N en direction du troisième dispositif de communication DC_3.

Lesdites étapes F30 et F40 sont mises en oeuvre de manière similaire aux étapes F10 et F20 respectivement.

Puis, le procédé de communication comporte une étape F50 de détermination, par le deuxième dispositif de communication DC_2, d'une troisième loi de phase LP_3, ladite troisième loi de phase LP_3 étant égale au produit d'Hadamard de ladite première loi de phase LP_1 par ladite deuxième loi de phase LP_2.

Le fait que la troisième loi de phase LP_3 soit déterminée comme étant égale audit produit d'Hadamard implique qu'elle est apte à configurer les déphaseurs passifs DP_1, ..., DP_N de sorte que le deuxième dispositif de communication DC_2 peut réfléchir un faisceau de transmission émis par le premier dispositif de communication DC_1 vers le troisième dispositif de communication DC_3 (i.e. ledit faisceau de transmission émis par le dispositif DC_1 est capté efficacement par le dispositif DC_2 et réfléchi par ce dernier vers le dispositif DC_3).

Le choix selon lequel la troisième loi de phase LP_3 correspond au produit d'Hadamard de la loi LP_1 par la loi LP_2 ne constitue cependant qu'une variante d'implémentation de l'invention. Ainsi, d'autres exemples sont envisageables comme par exemple une combinaison entre les lois LP_1 et LP_2 qui corresponde à une approximation du produit d'Hadamard.

Finalement, dans cet exemple de mise en oeuvre, le procédé de communication comporte une étape F60 de réflexion, par le deuxième dispositif de communication DC_2 configuré dans ledit troisième mode et utilisant ladite troisième loi de phase LP_3, d'au moins un faisceau de transmission BEAM_DATA vers le troisième dispositif de communication DC_3.

L'exemple de mise en oeuvre du procédé de communication de la figure 5 a été décrit en considérant que les étapes d'estimation des premier et deuxième canaux de propagation CA_1, CA_2 (étapes F10 et F30), ainsi que les étapes de détermination des première, deuxième et troisième lois de phase LP_1, LP_2 et LP_3 (étapes F20, F40 et F50) étaient mises en oeuvre par le deuxième dispositif de communication DC_2 . Toutefois, l'invention couvre également le cas où au moins une de ces étapes est mise en oeuvre par des moyens de traitement distincts des dispositifs de communication et configurés pour réaliser des simulations numériques sur la base desquelles l'estimation et/ou la détermination concernée est obtenue.

Par ailleurs, et de manière similaire à ce qui a été mentionné auparavant dans le cadre du procédé de contrôle, le procédé de communication selon l'invention couvre non seulement le cas où les dispositifs de communication DC_1, DC_2 et DC_3 communiquent entre eux par réflexion d'au moins un faisceau de données, mais également les cas où ces derniers échangent des données entre eux de manière conventionnelle (i.e. au moyen de leurs chaînes d'émission/réception respectives).

Enfin, l'invention a été décrite jusqu'à présent en considérant que seul le deuxième dispositif de communication DC_2 était conforme à l'invention. Il va de soi que l'invention reste applicable si le premier dispositif de communication DC_1 et/ou le troisième dispositif de communication DC_3 est/sont également conforme(s) à l'invention.

## Revendications

1. Dispositif de communication sans fil (DC_2) présentant une architecture hybride analogique-numérique configurée pour émettre et recevoir des faisceaux de transmission via un réseau d'antennes élémentaires (A_1,...,A_N) et comportant une unité de traitement analogique (ANA) comprenant des déphaseurs passifs (DP_1,...,DP_N), chaque déphaseur passif comportant un premier port (PO_1_1,...,PO_N_1) et un deuxième port (PO_1_2,...,PO_N_2), ledit dispositif de communication comportant un module de contrôle (MOD_CO) configuré pour commander des moyens de commutation (110_1, 110_2, 110_3, 110_4, 111) dudit dispositif de communication, de sorte que le dispositif de communication est apte à alterner entre trois modes distincts :
- un premier/deuxième mode dans lequel chaque déphaseur passif est intégré à une chaîne d'émission/de réception reliée à une antenne élémentaire,
- un troisième mode dans lequel chaque déphaseur passif est intégré à une ligne de transmission distincte des chaînes d'émission et de réception, ladite ligne de transmission comportant une première partie reliant le premier port dudit déphaseur passif à l'antenne élémentaire à laquelle il peut également être relié dans lesdits premier/deuxième modes et configurée de sorte que sensiblement toute l'énergie électromagnétique associée à un faisceau de transmission reçu par ladite antenne élémentaire est transmise vers le déphaseur passif, ladite ligne de transmission comportant en outre une deuxième partie reliant le deuxième port dudit déphaseur passif à une impédance (U_1,...,U_N) configurée de sorte à réfléchir ladite énergie électromagnétique.

2. Dispositif selon la revendication 1, dans lequel la première partie de la ligne de transmission comporte un circuit d'adaptation d'impédance (CIR_Z).

3. Dispositif selon l'une quelconque des revendications 1 à 2, dans lequel le module de contrôle (MOD_CO) est configuré pour mettre en oeuvre l'alternance entre lesdits trois modes distincts suivant un schéma temporel prédéterminé.

4. Dispositif selon la revendication 3, dans lequel ledit schéma temporel prédéterminé est conforme à une norme de télécommunication.

5. Dispositif selon l'une quelconque des revendications 1 à 2, dans lequel le module de contrôle (MOD_CO) est configuré pour mettre en oeuvre l'alternance entre lesdits trois modes distincts suivant un schéma temporel dynamique.

6. Système (10) de communication sans fil comportant :
- un premier dispositif de communication sans fil (DC_1) configuré pour émettre au moins un faisceau de transmission,
- un deuxième dispositif de communication sans fil (DC_2) selon l'une quelconque des revendications 1 à 5, apte à réfléchir au moins un desdits faisceaux de transmission dans une direction déterminée lorsqu'il est configuré selon ledit troisième mode,
- un troisième dispositif de communication sans fil (DC_3) configuré pour recevoir ledit au moins un faisceau de transmission réfléchi par ledit deuxième dispositif de communication.

7. Procédé de contrôle du fonctionnement d'un dispositif de communication sans fil (DC_2) selon l'une quelconque des revendications 1 à 5, ledit procédé de contrôle étant mis en oeuvre par le module de contrôle (MOD_CO) dudit dispositif de communication sans fil, et dans lequel les moyens de commutation (110_1, 110_2, 110_3, 110_4, 111) sont commandés (E20) de sorte que ledit dispositif de communication sans fil alterne entre lesdits trois modes distincts.

8. Programme d'ordinateur comportant des instructions pour la mise en oeuvre d'un procédé de contrôle selon la revendication 7 lorsque ledit programme est exécuté par au moins un ordinateur.

9. Support d'enregistrement lisible par un ordinateur sur lequel est enregistré un programme d'ordinateur selon la revendication 8.

10. Procédé de communication mis en oeuvre par un système (10) de communication sans fil selon la revendication 6, dans lequel au moins un faisceau de transmission émis par le premier dispositif de communication (DC_1) est réfléchi par le deuxième dispositif de communication (DC_2) lorsque ledit deuxième dispositif de communication est dans ledit troisième mode et reçu par le troisième dispositif de communication (DC_3).

11. Procédé selon la revendication 10, ledit procédé comportant des étapes de :
- estimation (F10) d'un premier canal de propagation (CA_1) entre les premier et deuxième dispositifs de communication (DC_1, DC_2),
- détermination (F20), par le deuxième dispositif de communication et en fonction de l'estimation du premier canal de propagation, d'une première loi de phase (LP_1) apte à configurer les déphaseurs passifs (DP_1,...,DP_N) en direction du premier dispositif de communication,
- estimation (F30) d'un deuxième canal de propagation(CA_2) entre les deuxième et troisième dispositifs de communication (DC_2, DC_3),
- détermination (F40), par le deuxième dispositif de communication et en fonction de l'estimation du deuxième canal de propagation, d'une deuxième loi de phase (LP_2) apte à configurer les déphaseurs passifs en direction dudit troisième dispositif de communication,
- détermination (F50), par le deuxième dispositif de communication, d'une troisième loi de phase (LP_3), ladite troisième loi de phase étant égale au produit d'Hadamard de ladite première loi de phase par ladite deuxième loi de phase,
- réflexion (F60), par le deuxième dispositif de communication configuré dans ledit troisième mode et utilisant ladite troisième loi de phase, dudit au moins un faisceau de transmission vers le troisième dispositif de communication.

## Patentansprüche

1. Drahtloskommunikationsvorrichtung (DC_2), die eine analog/digitale Hybridarchitektur aufweist, die dazu ausgestaltet ist, Übertragungsstrahlen über ein Netz aus elementaren Antennen (A_1,...,A_N) zu senden und zu empfangen, und eine analoge Verarbeitungseinheit (ANA) umfasst, die passive Phasenschieber (DP_1,...,DP_N) beinhaltet, wobei jeder Phasenschieber einen ersten Port (PO_1_1,...,PO_N_1) und einen zweiten Port (PO_1_2,...,PO_N_2) umfasst, wobei die Kommunikationsvorrichtung ein Steuermodul (MOD_CO) umfasst, das dazu ausgestaltet ist, Umschaltmittel (110_1, 110_2, 110_3, 110_4, 111) der Kommunikationsvorrichtung zu steuern, so dass die Kommunikationsvorrichtung geeignet ist, zwischen drei verschiedenen Modi zu wechseln:
- einem ersten/zweiten Modus, in dem jeder passive Phasenschieber in eine Sende-/Empfangskette integriert ist, die mit einer elementaren Antenne verbunden ist,
- einem dritten Modus, in dem jeder passive Phasenschieber in eine von den Sende- und Empfangsketten verschiedene Übertragungsleitung integriert ist, wobei die Übertragungsleitung einen ersten Teil umfasst, der den ersten Port des passiven Phasenschiebers mit der elementaren Antenne verbindet, mit der er auch in den ersten/zweiten Modi verbunden sein kann, und so ausgestaltet ist, dass im Wesentlichen die gesamte elektromagnetische Energie, die einem Übertragungsstrahl zugeordnet ist, der von der elementaren Antenne empfangen wird, zu dem passiven Phasenschieber übertragen wird, wobei die Übertragungsleitung ferner einen zweiten Teil umfasst, der den zweiten Port des passiven Phasenschiebers mit einer Impedanz (U_1,...,U_N) verbindet, die so ausgestaltet ist, dass sie die elektromagnetische Energie reflektiert.

2. Vorrichtung nach Anspruch 1, bei welcher der erste Teil der Übertragungsleitung eine Impedanzanpassungsschaltung (CIR_Z) umfasst.

3. Vorrichtung nach einem der Ansprüche 1 bis 2, bei der das Steuermodul (MOD_CO) dazu ausgestaltet ist, das Abwechseln zwischen den drei verschiedenen Modi nach einem vorbestimmten Zeitschema durchzuführen.

4. Vorrichtung nach Anspruch 3, bei der das vorbestimmte Zeitschema einer Telekommunikationsnorm entspricht.

5. Vorrichtung nach einem der Ansprüche 1 bis 2, bei der das Steuermodul (MOD_CO) dazu ausgestaltet ist, das Abwechseln zwischen den drei verschiedenen Modi nach einem dynamischen Zeitschema durchzuführen.

6. System (10) zur Drahtloskommunikation, umfassend:
- eine erste Drahtloskommunikationsvorrichtung (DC_1), die dazu ausgestaltet ist, mindestens einen Übertragungsstrahl zu senden,
- eine zweite Drahtloskommunikationsvorrichtung (DC_2) nach einem der Ansprüche 1 bis 5, die geeignet ist, mindestens einen der Übertragungsstrahlen in eine bestimmte Richtung zu reflektieren, wenn sie gemäß dem dritten Modus konfiguriert ist,
- eine dritte Drahtloskommunikationsvorrichtung (DC_3), die dazu ausgestaltet ist, den mindestens einen von der zweiten Kommunikationsvorrichtung reflektierten Übertragungsstrahl zu empfangen.

7. Verfahren zur Steuerung des Betriebs einer Drahtloskommunikationsvorrichtung (DC_2) nach einem der Ansprüche 1 bis 5, wobei das Steuerungsverfahren von dem Steuermodul (MOD_CO) der Drahtloskommunikationsvorrichtung durchgeführt wird und wobei die Umschaltmittel (110_1, 110_2, 110_3, 110_4, 111) so gesteuert (E20) werden, dass die Drahtloskommunikationsvorrichtung zwischen den drei verschiedenen Modi wechselt.

8. Computerprogramm, das Anweisungen umfasst, die bei der Ausführung des Programms durch mindestens einen Computer ein Steuerungsverfahren nach Anspruch 7 durchführen.

9. Computerlesbares Speichermedium, auf dem ein Computerprogramm nach Anspruch 8 gespeichert ist.

10. Kommunikationsverfahren, das von einem System (10) zur Drahtloskommunikation nach Anspruch 6 durchgeführt wird, wobei mindestens ein Übertragungsstrahl, der von der ersten Kommunikationsvorrichtung (DC_1) gesendet wird, von der zweiten Kommunikationsvorrichtung (DC_2) reflektiert wird, wenn die zweite Kommunikationsvorrichtung in dem dritten Modus ist, und von der dritten Kommunikationsvorrichtung (DC_3) empfangen wird.

11. Verfahren nach Anspruch 10, wobei das Verfahren die folgenden Schritte umfasst:
- Schätzen (F10) eines ersten Ausbreitungskanals (CA_1) zwischen der ersten und der zweiten Kommunikationsvorrichtung (DC_1, DC_2),
- Bestimmen (F20), durch die zweite Kommunikationsvorrichtung und in Abhängigkeit von der Schätzung des ersten Ausbreitungskanals, eines ersten Phasengesetzes (LP_1), das geeignet ist, die passiven Phasenschieber (DP_1, ...,DP_N) in Richtung der ersten Kommunikationsvorrichtung zu konfigurieren,
- Schätzen (F30) eines zweiten Ausbreitungskanals (CA_2) zwischen der zweiten und der dritten Kommunikationsvorrichtung (DC_2, DC_3),
- Bestimmen (F40), durch die zweite Kommunikationsvorrichtung und in Abhängigkeit von der Schätzung des zweiten Ausbreitungskanals, eines zweiten Phasengesetzes (LP_2), das geeignet ist, die passiven Phasenschieber in Richtung der dritten Kommunikationsvorrichtung zu konfigurieren,
- Bestimmen (F50), durch die zweite Kommunikationsvorrichtung, eines dritten Phasengesetzes (LP_3), wobei das dritte Phasengesetz gleich dem Hadamard-Produkt aus dem ersten Phasengesetz und dem zweiten Phasengesetz ist,
- Reflektieren (F60), durch die zweite Kommunikationsvorrichtung, die in dem dritten Modus konfiguriert ist und das dritte Phasengesetz verwendet, des mindestens einen Übertragungsstrahls zu der dritten Kommunikationsvorrichtung.

## Claims

1. Wireless communication device (DC_2) having a hybrid analogue-digital architecture configured to transmit and receive transmission beams via an array of antenna elements (A_1, ..., A_N) and comprising an analogue processing unit (ANA) comprising passive phase shifters (DP_1, ..., DP_N), each passive phase shifter comprising a first port (PO_1_1, ..., PO_N_1) and a second port (PO_1_2, ..., PO_N_2), said communication device comprising a control module (MOD_CO) configured to control switching means (110_1, 110_2, 110_3, 110_4, 111) of said communication device, so that the communication device is able to alternate between three distinct modes:
- a first/second mode in which each passive phase shifter is integrated into a transmission/reception chain connected to an antenna element,
- a third mode in which each passive phase shifter is integrated into a transmission line distinct from the transmission and reception chains, said transmission line comprising a first portion connecting the first port of said passive phase shifter to the antenna element to which it may also be connected in said first/second mode and configured so that substantially all the electromagnetic energy associated with a transmission beam received by said antenna element is transmitted to the passive phase shifter, said transmission line further comprising a second portion connecting the second port of said passive phase shifter to an impedance (U_1, ..., U_N) configured so as to reflect said electromagnetic energy.

2. Device according to Claim 1, wherein the first portion of the transmission line comprises an impedance-matching circuit (CIR_Z).

3. Device according to either one of Claims 1 and 2, wherein the control module (MOD_CO) is configured to implement the alternation between said three distinct modes according to a predetermined time scheme.

4. Device according to Claim 3, wherein said predetermined time scheme is in accordance with a telecommunication standard.

5. Device according to either one of Claims 1 and 2, wherein the control module (MOD_CO) is configured to implement the alternation between said three distinct modes according to a dynamic time scheme.

6. Wireless communication system (10) comprising:
- a first wireless communication device (DC_1) configured to transmit at least one transmission beam,
- a second wireless communication device (DC_2) according to any one of Claims 1 to 5, which is able to reflect at least one of said transmission beams in a determined direction when it is configured according to said third mode,
- a third wireless communication device (DC_3) configured to receive said at least one transmission beam reflected by said second communication device.

7. Method for controlling the operation of a wireless communication device (DC_2) according to any one of Claims 1 to 5, said control method being implemented by the control module (MOD_CO) of said wireless communication device, and wherein the switching means (110_1, 110_2, 110_3, 110_4, 111) are controlled (E20) so that said wireless communication device alternates between said three distinct modes.

8. Computer program comprising instructions for implementing a control method according to Claim 7 when said program is executed by at least one computer.

9. Computer-readable storage medium on which a computer program according to Claim 8 is stored.

10. Communication method implemented by a wireless communication system (10) according to Claim 6, wherein at least one transmission beam transmitted by the first communication device (DC_1) is reflected by the second communication device (DC_2) when said second communication device is in said third mode and received by the third communication device (DC_3).

11. Method according to Claim 10, said method comprising steps of:
- estimating (F10) a first propagation channel (CA_1) between the first and the second communication device (DC_1, DC_2),
- the second communication device determining (F20), as a function of the estimate of the first propagation channel, a first phase law (LP_1) which is able to configure the passive phase shifters (DP_1, ..., DP_N) in the direction of the first communication device,
- estimating (F30) a second propagation channel (CA_2) between the second and the third communication device (DC_2, DC_3),
- the second communication device determining (F40), as a function of the estimate of the second propagation channel, a second phase law (LP_2) which is able to configure the passive phase shifters in the direction of said third communication device,
- the second communication device determining (F50) a third phase law (LP_3), said third phase law being equal to the Hadamard product of said first phase law and said second phase law,
- the second communication device configured in said third mode and using said third phase law reflecting (F60) said at least one transmission beam to the third communication device.
